# EUROPÄISCHE PATENTSCHRIFT

(11) **EP 3 036 090 B1**
(45) Veröffentlichungstag und Bekanntmachung des Hinweises auf die Patenterteilung: **06.06.2018**
(21) Anmeldenummer: 14755807.6
(22) Anmeldetag: 22.08.2014
(51) Int. Cl.: B29C 70/48, B29C 70/54, B29C 45/14, B29C 33/44

(54) **WERKZEUGSYSTEM UND VERFAHREN ZUR HERSTELLUNG VON BAUTEILEN NACH DEM RTM-VERFAHREN**
MOULD SYSTEM AND METHOD FOR PRODUCING COMPONENTS BY THE RTM METHOD
SYSTÈME D'OUTIL ET PROCÉDÉ DE FABRICATION DE COMPOSANTS PAR LE PROCÉDÉ RTM

(30) Priorität: 23.08.2013 DE 102013216863
(43) Veröffentlichungstag der Anmeldung: 29.06.2016
(73) Patentinhaber: ThyssenKrupp Carbon Components GmbH, 01723 Kesselsdorf (DE)
(72) Erfinder: MÄKE, Sandro, 01796 Dohma (DE); WERNER, Jens, 01640 Coswig (DE); BARTSCH, André, 02747 Großhennersdorf (DE); DRESSLER, Michael, 01159 Dresden (DE); KÖHLER, Christian, 01099 Dresden (DE)
(74) Vertreter: Kailuweit & Uhlemann Patentanwälte Partnerschaft mbB
(86) Internationale Anmeldenummer: PCT/EP2014/067874
(87) Internationale Veröffentlichungsnummer: WO 2015/025027

(56) Entgegenhaltungen:
- CA-A1- 2 842 142
- DE-A1-102009 010 692
- DE-A1-102011 083 688

## Beschreibung

Die Erfindung betrifft ein Werkzeugsystem und ein Verfahren zur Herstellung von Bauteilen nach dem RTM-Verfahren.

Mittels des Resin Transfer Molding (RTM)-Verfahrens können komplex geformte Faserverbundkunststoffteile hergestellt werden. Dabei gibt es zwei Verfahrensansätze. In einer ersten Variante wird der duroplastische Matrixwerkstoff schnell auf die Oberfläche des Faser-Preforms, welches sich in einer geöffneten Werkzeugform befindet ausgebracht, und anschließend wird die Werkzeugform geschlossen und die Faser-Preform aufgrund des aus den Schließkräften der Hydraulikpresse resultierenden hohen Werkzeuginnendrucks gleichzeitig komprimiert und konsolidiert. In einer zweiten Variante wird der duroplastische Matrixwerkstoff in eine geschlossene Werkzeugform, in der sich eine Faser-Preform befindet, mit sehr hohem Injektionsdruck eingebracht. Der hohe Injektionsdruck führt zu einer zeitlichen Verkürzung der Konsolidierungsphase, bei Sicherstellung der vollständigen Imprägnierung der Faserverstärkungsstruktur.

Für beide oben genannte Verfahrensansätze werden häufig Laminierpressen eingesetzt. Die Pressen bestehen aus einem Pressenunterteil und einem Pressenoberteil, die im geschlossenen Zustand eine druckdichte Prozesskammer für das Bauteil bilden. Das Pressenunterteil und/oder das Pressenoberteil sind relativ zum jeweils anderen Pressenteil axial bewegbar, um die Laminierpresse zu öffnen und zu schließen. Weiterhin können Elemente zum Evakuieren und/oder zur Druckbeaufschlagung integriert sein.

Gegenstand der DE 10 2005 008 479 B4 ist ein Werkzeugsystem bei dem ein Werkzeugteil eine wannenartige Rahmenstruktur aufweist, in die das Ausgangsmaterial zum Herstellen des Bauteils eingebracht ist. In diese Wanne wird ein Deckel so eingesetzt, dass das Ausgangsmaterial zum Herstellen des Bauteils zwischen der Wanne und dem Deckel eingeschlossen ist und beide Teile mit einer Dichtung gegeneinander abgedichtet sind. Dabei wird der Deckel über eine Tauchkante in die Wanne eingesetzt. Nachteilig können hinterschnittene Konturen mit dem vorgestellten Werkzeug dieser Druckschrift nicht erzeugt werden, da die Entformung des Werkzeuges immer axial zur Dichtfläche erfolgen muss.

DE 10 2011 083 688 A1 offenbart ein Werkzeugsystem mit einer Mehrzahl von scheibenförmigen, übereinander gestapelten Gießwerkzeugen. Die Aufgabe der Erfindung besteht darin, die Nachteile des Standes der Technik zu überwinden und ein Werkzeugsystem und ein Verfahren bereitzustellen, das es gestattet komplexe Faserverbundkunststoffteile, insbesondere mit einer hinterschnittenen Kontur einfach und kostengünstig herzustellen. Nicht zuletzt sollen Verfahren und Vorrichtung für eine Serienfertigung geeignet sein.

Die erfindungsgemäße Aufgabe wird gelöst durch die Merkmale der Ansprüche 1 und 8. Bevorzugte Weiterbildungen der Erfindung sind in rückbezogenen Unteransprüchen dargestellt.

Das erfindungsgemäße Werkzeugsystem ist in dem Anspruch 1 definiert und hat ein formgebendes Werkzeug und ein Hüllwerkzeug. Das mehrteilige formgebende Werkzeug umschließt die Kavität des herzustellenden Bauteils im geschlossenen Zustands. Die Anzahl der Teile des formgebenden Werkzeuges ist dabei von der Komplexität des herzustellenden Bauteils abhängig, insbesondere von der Anzahl der Hinterschnitte.

Die Außenkontur des formgebenden Werkzeugs im geschlossenen Zustand ist derart gestaltet, dass das formgebende Werkzeug in die Kavität des Hüllwerkzeuges einlegbar ist. Die Kavität des Hüllwerkzeuges entspricht weitestgehend der äußeren Form des formgebenden Werkzeuges. In jedem Fall muss die Kavität des Hüllwerkzeuges größer sein, als die äußere Form des formgebenden Werkzeuges im geschlossenen Zustand, da diese sonst nicht mehr in das Hüllwerkzeug einlegbar wäre. Auch wenn die Kavität des Hüllwerkzeuges wesentlich größer als die äußere Form des formgebenden Werkzeugs ist, ist dies ungünstig, da alle Zwischenräume sich mit dem einzubringenden duroplastischen Matrixwerkstoff füllen und somit einen Materialverlust bedeuten.

Das formgebende Werkzeug kann auch erst durch das Hüllwerkzeug vollständig geschlossen werden. Hierfür wird das geschlossene formgebende Werkzeug mit teilweise noch offener Kavität so in das entsprechend ausgebildete Hüllwerkzeug eingebracht, dass die Kavität für das Werkstück anschließend durch das formgebende und das Hüllwerkzeug begrenzt wird. Dabei ist es vorteilhaft, wenn die Entformungsrichtung für die Zusammenführung von formgebendem und Hüllwerkzeug der Entformungsrichtung des Hüllwerkzeuges entspricht.

Alternativ kann auch ein Teil des formgebenden Werkzeuges im Hüllwerkzeug liegen, während die anderen Teile des formgebenden Werkzeuges, geschlossen und die Werkstückkavität umschließend, in das Hüllwerkzeug eingebracht werden. So schließt sich das formgebende Werkzeug erst mit dem Einbringen in das Hüllwerkzeug.

Die konkrete Gestaltung der Werkzeuge hängt von der Form des herzustellenden Werkstücks ab, so dass im Rahmen dieser Erfindungsbeschreibung keine allgemein bevorzugte Form angegeben werden kann.

Beispielsweise für rotationssymmetrische Werkstücke hat es sich als vorteilhaft erwiesen, den Umfang durch vier Elemente des formgebenden Werkzeugs abzubilden. Vorteilhaft wird die Faser-Preform so beim Schließen des Werkzeugs nicht eingeklemmt oder verschoben.

Das Hüllwerkzeug ist mehrteilig aufgebaut, besonders bevorzugt jedoch zweiteilig, da so die Anzahl der zu dichtenden Spalten am geringsten ist.. Diese Teile bilden im geschlossenen Zustand eine dicht abgeschlossene Prozesskammer. Vorteilhaft muss das formgebende Werkzeug, das eine mit der Komplexität der nachzubildenden Kavität steigende Anzahl an Teilen aufweist, nicht abgedichtet sein. Natürlich sollten die Spaltmaße des formgebenden Werkzeuges im geschlossenen Zustand gering sein, um eine hohe Qualität des herzustellenden Bauteils zu gewährleisten. Die druckdichte Prozesskammer zum Aufbau des Druckes für die Konsolidierung wird bei der erfindungsgemäßen Vorrichtung jedoch durch das Hüllwerkzeug gebildet. So füllen sich alle Spalten des formgebenden Werkzeuges während der Konsolidierung mit dem Matrixwerkstoff. Aufgrund der bevorzugt geringen Spaltmaße brechen diese vorteilhaft bei der Entformung des formgebenden Werkzeuges vom Bauteil ab.

Dabei sind auf der Oberfläche der Einzelteile des formgebenden Werkzeuges Abstandshalter teilweise oder ganzflächig, beabstandet angeordnet. Durch diese Abstandshalter wird die Reinigung des formgebenden Werkzeuges nach Gebrauch erheblich vereinfacht. Durch die Abstandshalter wird eine gut entnehmbare bzw. gut zu reinigende Dicke des Matrixwerkstoffes eingestellt. So ist die Reinigung des formgebenden Werkzeuges von einer sehr dünnen Schicht Matrixwerkstoff sehr aufwändig im Vergleich zu einer etwas dickeren Schicht, die einfach abgenommen werden kann. Weiterhin vorteilhaft wird durch Abstandshalter auf den schrägen Flächen zur Erzeugung der Schließkraft des formgebenden Werkzeuges die Reibung reduziert, wodurch eine geringere Schließkraft notwendig ist.

Besonders vorteilhaft sind die Kavität des Hüllwerkzeuges und die äußere Form des formgebenden Werkzeuges derart aufeinander abgestimmt, dass das Hüllwerkzeug im geschlossenen Zustand das formgebende Werkzeug in seiner Kavität geschlossen hält.

Besonders bevorzugt bringt das Hüllwerkzeug im geschlossenen Zustand eine Schließkraft auf das formgebende Werkzeug auf. Hierzu sind außen am formgebenden Werkzeug und korrespondierend innen im Hüllwerkzeugschräge Flächen angeordnet, mittels derer die Schließkraft des Hüllwerkzeuges in eine Schließkraft für das formgebende Werkzeug umgewandelt wird.

Die Schließkräfte für das Hüllwerkzeug können über einen oberen und/oder einen unteren Pressentisch eingeleitet werden.

Besonders vorteilhaft sind benachbarte Teile des formgebenden Werkzeuges durch Formschluss derart verbunden, dass nur noch eine Bewegung in Schließrichtung des formgebenden Werkzeuges möglich ist. Vorteilhaft kann so die Schließkraft des Hüllwerkzeuges besonders effizient zum Schließen des formgebenden Werkzeuges mitgenutzt werden, da die die durch die schrägen Flächen eingeleitete Kraft nur zu einer Bewegung in Schließrichtung des formgebenden Werkzeuges führen kann.

Weiterhin bevorzugt hat das formgebende Werkzeug im geschlossenen Zustand nur in unmittelbarer Nähe zur Kavität ein möglichst geringes Spaltmaß von bevorzugt kleiner 1 mm, besonders bevorzugt zwischen 0,05 mm und 0,2 mm. Alle anderen Spalte sind breiter ausgeführt, bevorzugt größer 0,2 mm, besonders bevorzugt zwischen 0,2 mm und 3 mm. Vorteilhaft wird so eine hohe Qualität des herzustellenden Werkstücks bei gleichzeitigem geringen Aufwand für die Reinigung der Werkzeuge erreicht.

Prinzipiell variiert das optimale Spaltmaß für eine einfache Reinigung bei gleichzeitig gewünschtem geringem Materialverlust in Abhängigkeit des verwendeten Matrixwerkstoffs. Die Abstandshalter sind bevorzugt als Rippen oder Punkte ausgebildet. Bevorzugt haben die Abstandshalter eine Höhe von 0,5 bis 3 mm, besonders bevorzugt 1 mm.

Weiterhin bevorzugt haben die Abstandshalter eine linienförmige oder punktförmige, also möglichst geringe, Kontaktfläche mit dem benachbarten Teil des formgebenden oder Hüllwerkzeuges, Besonders vorteilhaft ist die Anlagefläche gewölbt bevorzugt mit einem Radius von 1 mm bis 100 mm. Vorteilhaft wird so eine hertzsche Pressung am Berührungspunkt des Abstandshalters mit dem benachbarten Bauteil im geschlossenen Zustand der Werkzeuge erreicht, wodurch der überschüssige Matrixwerkstoff einfach rückstandsfrei entnehmbar ist. Die Querschnittsform der Abstandshalter ist somit bevorzugt kreisförmig mit konvex gewölbter Spitze oder sinus- bzw. parabelförmig.

Weiterhin bevorzugt ist in einer Kontaktfläche der beiden Hüllwerkzeugteile und zwischen oberem Hüllwerkzeug und dem Oberteil des formgebenden Werkzeugs jeweils eine Dichtung so angeordnet, dass die beiden Hüllwerkzeugteile im geschlossenen Zustand eine druckdichte Prozesskammer ergeben.

Weiterhin bevorzugt ist das Werkzeugsystem mit einem Mischkopf zur Zuführung des Matrixmaterials ausgerüstet, dessen Zuleitung seitlich aus einem der Hüllwerkzeugteile herausgeführt wird

In einer besonders bevorzugten Ausführung weisen die Außenflächen des formgebenden Werkzeugs Anschlagflächen zur Verbindung mit Tragelementen auf, die bevorzugt magnetisch befestigt werden. Elemente für eine formschlüssige Verbindung würden nachteilig nach Benutzung von Matrixmaterial umschlossen sein und müssten aufwendig gereinigt werden. Hierbei ist die Verwendung einer magnetischen Befestigung vorteilhaft. Alternativ kann die Befestigung auch mittels Saugnäpfen erfolgen.

Weiterhin Gegenstand der Erfindung ist ein Verfahren gemäß Anspruch 8 zur Konsolidierung eines Faserverbundbauteils mit Hilfe des beschriebenen Werkzeugsystems.

In einem ersten Verfahrensschritt a) wird die Faser-Preform in die Kavität des geöffneten formgebenden Werkzeugs eingebracht und dieses geschlossen. Alternativ kann bei der Herstellung der Faser-Preform bereits ein Element des formgebenden Werkzeuges eingesetzt worden sein. In Folge dieses Verfahrensschrittes ist die Faser-Preform in der Kavität des formgebenden Werkzeuges und von dieser umschlossen. Es ist nicht notwendig, dass das formgebende Werkzeug die Kavität für das Werkstück vollständig umschließt, dies kann wie oben beim Werkzeugsystem erläutert, auch erst durch bzw. beim nachfolgenden Transport in das das Hüllwerkzeug erfolgen. So kann das formgebende Werkzeug auch durch einen Bereich des Hüllwerkzeuges oder auch durch ein im Hüllwerkzeug befindliches Teil des formgebenden Werkzeuges vollständig geschlossen werden.

In einer bevorzugten Ausgestaltung des Verfahrens wird insbesondere in die Kavität des formgebenden Werkzeugs vor Verwendung ein Antihaftmittel eingebracht. Dies erleichtert das Entformen des konsolidierten Bauteils. Um die Reinigung vom Matrixwerkstoff zu erleichtern kann es auch sinnvoll erscheinen, Antihaftmittel auf die anderen Oberflächen des formgebenden Werkzeugs und/oder in der Kavität des Hüllwerkzeugs aufzutragen. Als Antihaftmittel eignet sich z. B. Teflon.

Dann wird in einem zweiten Verfahrensschritt b) das formgebende Werkzeug, bevorzugt mit Hilfe eines Hebezeuges, in die untere Hälfte des Hüllwerkzeugs eingesetzt. Bevorzugt sind hierfür am formgebenden Werkzeug Anschlagmittel vorgesehen, besonders bevorzugt erfolgt die Verbindung zwischen Anschlagmittel und Hebezeug durch Magnetkräfte oder Saugnäpfe.

Nun ist die Kavität des Werkstückes im formgebenden Werkzeug vollständig geschlossen.

Anschließend wird die obere Hälfte des Hüllwerkzeugs aufgesetzt und das Hüllwerkzeug geschlossen. Bevorzugt wird durch eine Presse die Schließkraft auf das Hüllwerkzeug aufgebracht.

Nun wird in einem dritten Verfahrensschritt c) der Matrixwerkstoff in die druckdichte Kavität des Hüllwerkzeuges und/oder direkt in die Kavität des formgebenden Werkzeugs eingebracht. Durch den aufgebrachten Druck und die gewählte Temperatur konsolidiert das Bauteil in der Kavität des formgebenden Werkzeuges. Die bei der Konsolidierung tatsächlich einzusetzenden Parameter von Druck und Temperatur hängen von den verwendeten Materialien ab und sind durch diese bekannt. Das Einspritzen des Matrixwerkstoffs erfolgt bevorzugt über ein oder mehrere Injektionsports, die bevorzugt punkt-, linien- oder kanalförmig im formgebenden Werkzeug angeordnet sind.

Nach der Konsolidierung wird in einem Verfahrensschritt d) das Hüllwerkzeug geöffnet. Dann wird das formgebende Werkzeug bevorzugt wieder mit Hilfe eines Hebezeuges aus der unteren Hälfte des Hüllwerkzeugs herausgehoben.

Nun kann in einem letzten Verfahrensschritt e) das formgebende Werkzeug geöffnet und das fertige Bauteil entnommen werden.

Das im Zwischenraum zwischen Hüllwerkzeug und formgebenden Werkzeug ausgehärtete Matrixmaterial verbleibt als Matrixmaterialkörper bis zur Entformung am formgebenden Werkzeug. Bei der Öffnung des formgebenden Werkzeugs zur Entformung des Bauteils wird der Matrixmaterialkörper bevorzugt im Bereich der durch die Abstandshalter entstandenen Sollbruchstellen teilweise zerstört und lässt sich so leicht entfernen. Damit wird die Entformung des Bauteils unterstützt und der Aufwand für die Reinigung der Werkzeuge reduziert.

Nach der Werkzeugreinigung kann eine neue Faser-Preform in das formgebende Werkzeug eingebracht werden und das Verfahren wiederholt werden.

In einer bevorzugten Ausgestaltung des Verfahrens wird vor Durchführung des Schrittes c) die Kavität evakuiert, also die darin befindliche Luft abgesaugt. Vorteilhaft kann so der Konsolidierungsprozess beschleunigt werden und die Luftauslassventile am Hüllwerkzeug können entfallen.

### Ausführungsbeispiel

Nachfolgend wird die Erfindung anhand eines Ausführungsbeispiels erläutert.

Dabei zeigen schematisch:
- **Fig. 1:**: ein herzustellendes Werkstück,
- **Fig. 2:**: die Explosionsdarstellung eines mehrteiligen formgebenden Werkzeugs,
- **Fig. 3:**: eine Schnittdarstellung des entformten mehrteiligen formgebenden Werkzeugs mit eingelegtem Werkstück,
- **Fig. 4:**: eine Detailansicht des formgebenden Werkzeugs,
- **Fig. 5:**: eine isometrische Darstellung des geschlossenen formgebenden Werkzeugs,
- **Fig. 6:**: das Einsetzen des mehrteiligen formgebenden Werkzeugs in das untere Hüllwerkzeug,
- **Fig. 7:**: das geschlossene Hüllwerkzeug,
- **Fig. 8:**: einen Schnitt durch die Mittenebene des geschlossenen Werkzeugsystems mit unterem und oberem Pressentisch, und
- **Fig. 9:**: eine Detailansicht eines Bereichs in dem zwei Elemente des formgebenden Werkzeugs mit dem Hüllwerkzeug zusammentreffen.
- **Fig. 10:**: verschiedene bevorzugte Querschnitte der Abstandshalter 3.

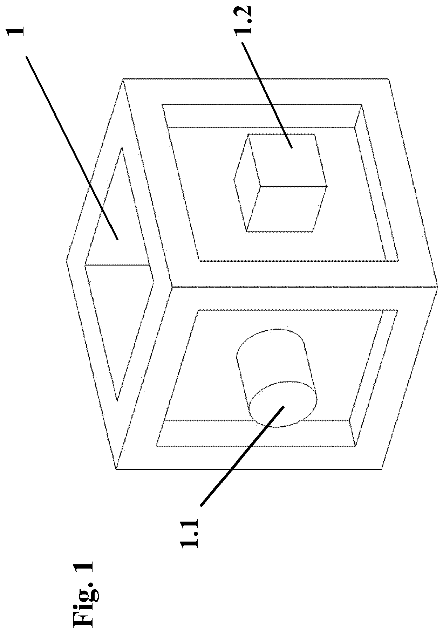

Figur 1 zeigt ein Hinterschnitte aufweisendes kubisches Werkstück 1. Das Werkstück 1 hat Hinterschneidungen 1.1 und 1.2, die ein mehrfach unterteiltes formgebendes Werkzeug notwendig machen.

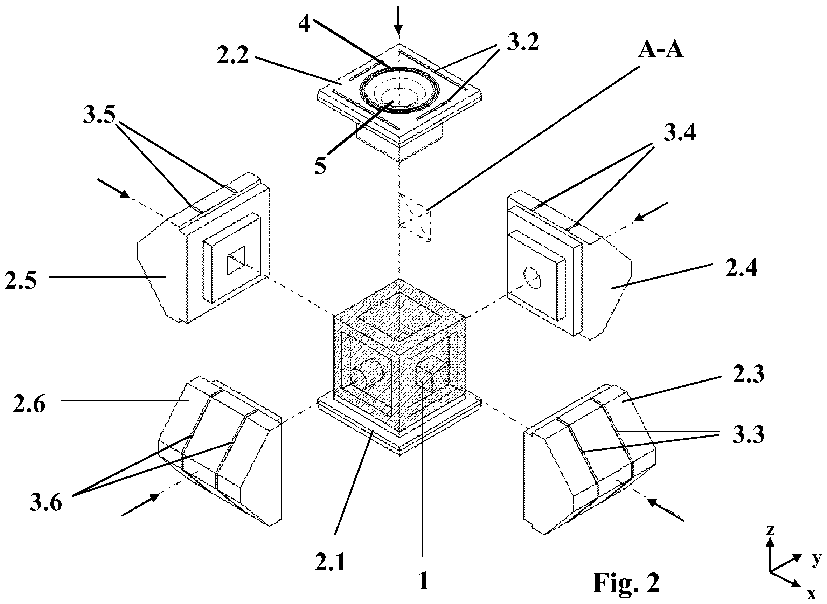

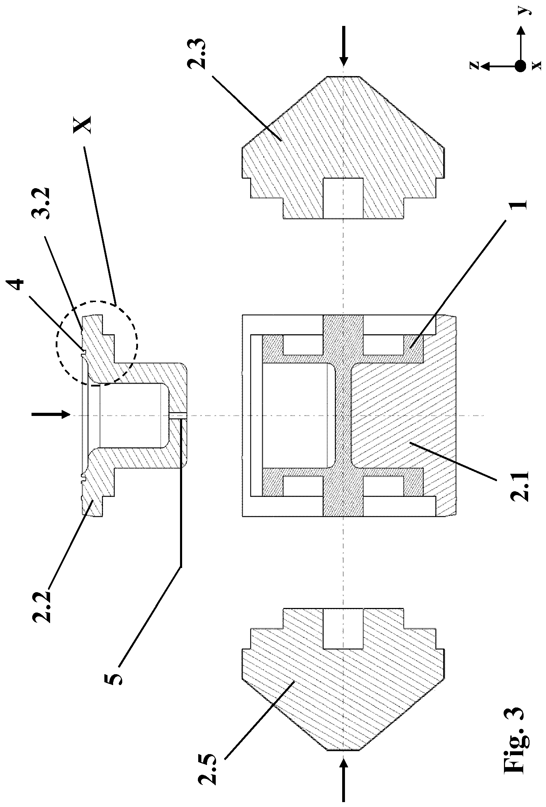

Figur 2 zeigt das Werkstück 1 mit geöffnetem formgebendem Werkzeug 2 in Explosionsdarstellung. Das formgebende Werkzeug 2 ist unterteilt in ein Bodenelement 2.1, ein Deckelelement 2.2 und Seitenelemente 2.3 bis 2.6. Jedes der Elemente 2.1 bis 2.6 hat Abstandshalter 3.1 bis 3.6 mit einer Höhe von 2mm, die ein einfaches Ablösen des nach der Konsolidierung anhaftenden Matrixwerkstoffs ermöglichen. Im Deckelelement 2.2 ist ein Injektionsport 5 vorgesehen, dem über eine Zuleitung Matrixwerkstoff von außen zugeführt wird. Um den Injektionsport 5 ist eine Dichtungsnut 4 angeordnet, die verhindert, dass Matrixmaterial in den Kanal für die Zuleitung gelangt. Mit dem Bezugszeichen A-A wird die Schnittebene für die Darstellung der Figur 3 angegeben.

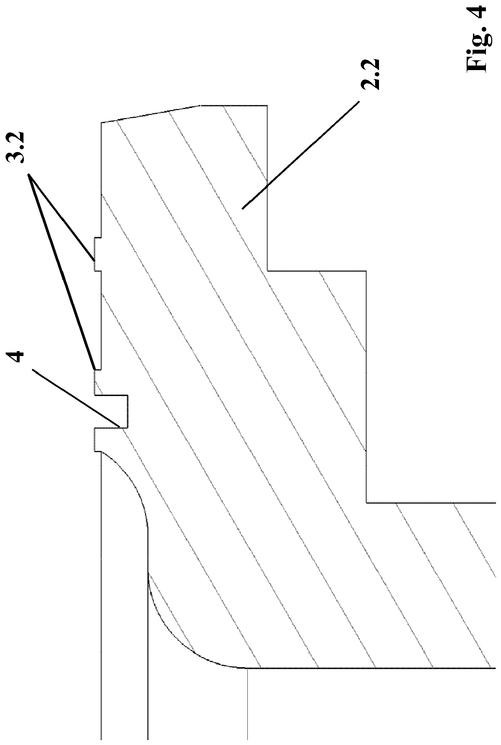

Figur 3 zeigt eine Schnittdarstellung der Figur 2. Im Deckelelement 2.2 ist der Injektionsport 5 und die Dichtungsnut 4. In Figur 2 und 3 sind die geneigten, nach außen gerichteten Flächen der Seitenelemente 2.3 bis 2.6 gut erkennbar. Der Inhalt des mit X bezeichneten, gestrichelt dargestellten Kreises wird in detaillierter Darstellung als Figur 4 gezeigt.

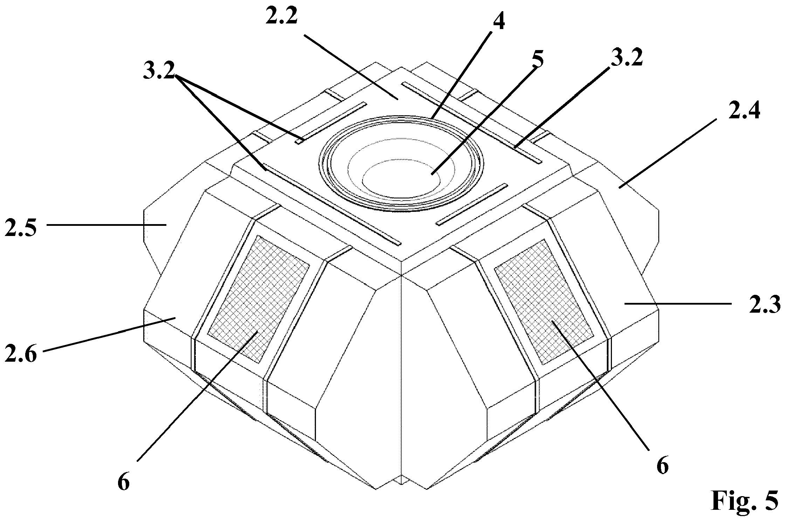

In Figur 5 sind ist das geschlossene formgebende Werkzeug 2 dargestellt. An jedem Seitenelement 2.3 bis 2.6 sind Anschlagflächen 6 zur Verbindung mit Hebemitteln vorgesehen. Zum Anheben kommt ein hier nicht gezeigtes Traggerüst zum Einsatz, das vier Magnete zur Verbindung mit den Anschlagflächen 6 aufweist.

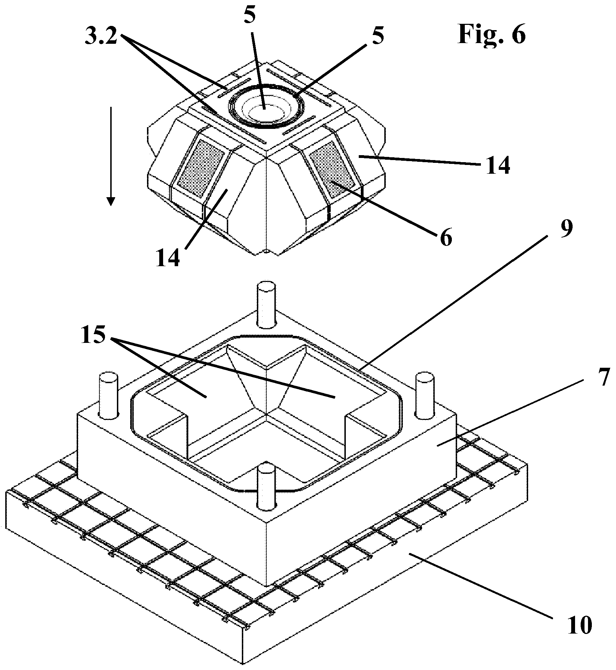

Figur 6 zeigt das geschlossene formgebende Werkzeug 2 während des Einsetzens in ein unteres Hüllwerkzeug 7, welches auf einem unteren Pressentisch 10 angeordnet ist. Gut erkennbar sind die geneigten Flächen 14 der Seitenelemente 2.3 - 2.6 des formgebenden Werkzeugs 2 und die hierzu korrespondierenden geneigten Flächen 15 im Inneren des unteren Hüllwerkzeuges 7. Analoge geneigte Flächen 15 sind auch im hier nicht näher dargestellten oberen Hüllwerkzeug 8 angeordnet. Die geneigten Flächen 14 und 15 korrespondieren derart miteinander, dass die Schließkraft des Hüllwerkzeuges 7, 8 als Schließkraft für das formgebenden Werkzeug 2 wirkt, also die Seitenteile 2.3 - 2.6 in Richtung von Deckelelement 2.2 und Bodenelement 2.1 drückt.

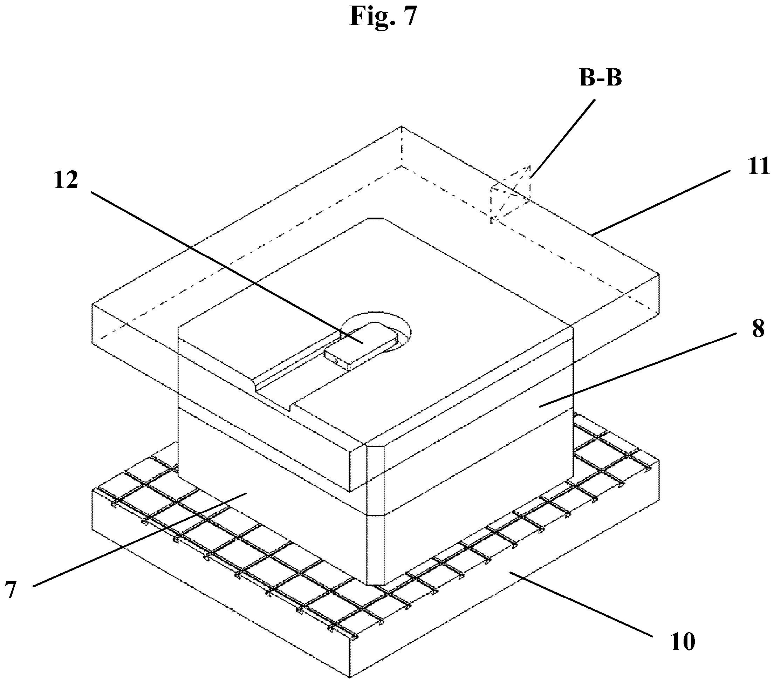

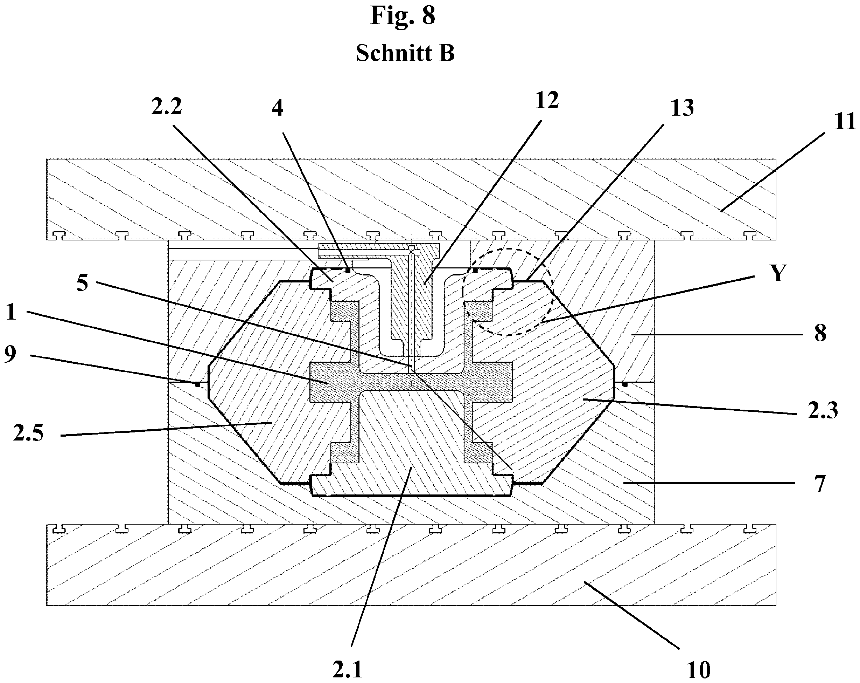

Figur 7 zeigt das untere Hüllwerkzeug 7 nach dem Einsetzen des formgebenden Werkzeuges 2 und dem Aufsetzen des oberen Hüllwerkzeuges 8. Anschließend wird durch einen oberen Pressentisch 11 die Schließkraft auf das Hüllwerkzeug 7, 8 aufgebracht. In einem Kanal innerhalb des oberen Hüllwerkzeuges 8 erfolgt die Zuleitung von Matrixwerkstoff zu einem Mischkopf 12, der vor dem in der Figur 7 nicht gezeigten Injektionsport liegt. Mit B-B wird die Schnittebene für die Darstellung von Figur 8 verdeutlicht.

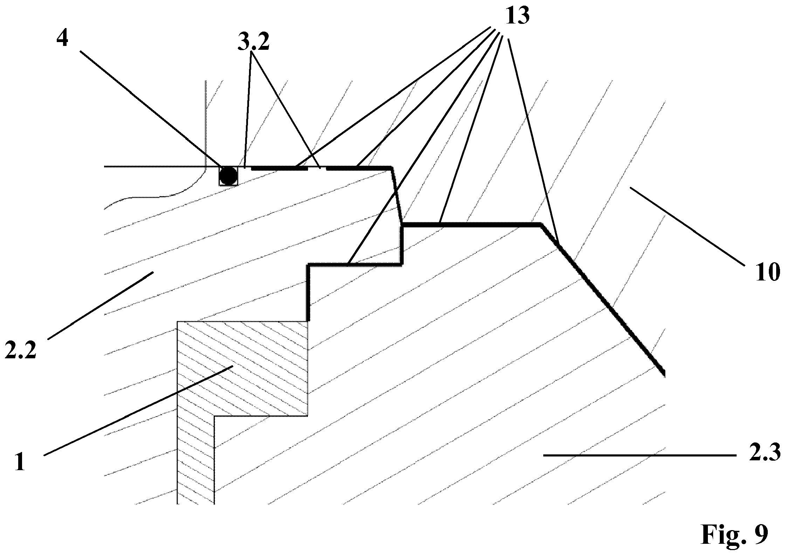

Figur 8 zeigt das geschlossene Hüllwerkzeug 7, 8 mit darin befindlichem formgebendem Werkzeug 2. Im Deckelelement 2.2 ist der Mischkopf 12 angeordnet, dem nachgeordnet der Injektionsport 5 ist. Das Matrixmaterial ist hier ein in 2-Komponenten vorliegendes Harz, wobei die 2-Komponenten des Harzes getrennt über eine Zuleitung dem Mischkopf 12 im Deckelelement 2.2 zugeführt werden, dort gemischt und anschließend über den Injektionsport 5 in die Kavität des formgebenden Werkzeuges 2 gepresst. Mit Y wird ein Bereich bezeichnet, der detailliert in Figur 9 dargestellt ist.

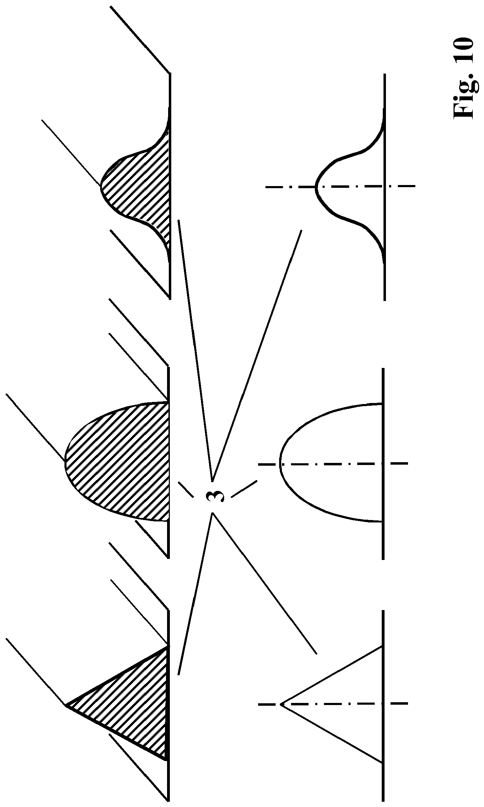

In diesem in Figur 9 dargestellten Bereich treffen das Deckelement 2.2, das Seitenelement 2.3 und das obere Hüllwerkzeug 8 aufeinander. Das Matrixmaterial 13 füllt alle Zwischenräume zwischen den Teilen des formgebenden Werkzeuges 2 und tritt über diese Zwischenräume auch in den Bereich zwischen formgebenden Werkzeug 2 und Hüllwerkzeug 7, 8 aus. Durch die Abstandshalter 3.2 wird eine definierte Dicke der Zwischenräume und damit des anschließend zu entfernenden Matrixmaterials erreicht. Die Höhe von 2 mm hat sich als besonders vorteilhaft herausgestellt, da der Matrixwerkstoff in dieser Dicke bei nicht zu hohem Materialverlust gut entnehmbar ist. Die hier dargestellten Abstandshalter haben eine weitestgehend rechteckige Querschnittsform. Bevorzugt aufgrund der resultierenden hertzschen Pressung und der damit verbundenen rückstandsfreien Entnahme sind jedoch Querschnittsformen mit einer punkförmigen oder linienförmigen Auflagefläche, wie in Figur 10 gezeigt. So sind in Figur 10 drei verschiedene bevorzugte Querschnittsformen der Abstandshalter 3 gezeigt. Links eine Dreiecks-, mittig eine Parabel- und auf der rechten Seite eine Kreiswinkelfunktion. Die Parabelfunktion und die Kreiswinkelfunktion bewirken vorteilhaft eine hertzsche Pressung, die eine einfache Entnahme des überschüssigen Matrixmaterials ermöglicht und zudem vorteilhaft einen geringen Verschleiß der Abstandshalter bei häufiger Benutzung gewährleisten.

Zur Durchführung des Verfahrens wird zunächst eine Kohlenstofffaser-Preform mit den Außenabmessungen 250x250x200 mm (LxBxH) in das Bodenelement 2.1 des formgebenden Werkzeugs 2 eingesetzt. Danach werden die vier Seitenelemente 2.3...2.6 axial über ein auf einer Basisplatte angeordnetes Linearführungssystem an das Bodenelement 2.1 heranbewegt bis sie an den Seitenflächen des Bodenelements 2.1 anliegen (Fig. 2, 3). Danach wird das Deckelelement 2.2 in den so entstandenen kastenförmigen Unterbau eingesetzt und das formgebende Werkzeug 2 komplettiert, das die Außenmaße 500x500x300 mm (LxBxH) und ein Gesamtgewicht von 500 kg aufweist (Fig. 5).

Alternativ könnte das Bodenelement 2.1 auch im unteren Hüllwerkzeug 7 angeordnet sind, so dass das formgebende Werkzeug 2 erst nach dem Einsetzen in das untere Hüllwerkzeug 7 die Kavität für das herzustellende Werkstück vollständig umschließt. Weiterhin alternativ könnte das Bodenelement 2.1 auch durch das untere Hüllwerkzeug 7 selbst ausgebildet sein.

Das formgebende Werkzeug 2 wird von einem Transportgerüst, das über Tragmagnete verfügt, an den oberen, geneigten Flächen der Seitenelemente 2.3...2.6 aufgenommen und in das, auf einem unteren Pressentisch 10 angeordnete, untere Hüllwerkzeug 7 eingesetzt (Fig. 6). Diese Anordnung wird unter ein Pressengerüst geschoben, dann wird das obere Hüllwerkzeug 8, das in dem Pressengerüst angeordnet ist, auf das untere Hüllwerkzeug 7 abgesenkt, die Presse geschlossen und mit einer Zuhaltekraft von mindestens 20000 kN beaufschlagt (Fig. 7).

In einer Aussparung des Deckelelements 2.2 des formgebenden Werkzeugs 2 ist ein Mischkopf 12 angeordnet über den das Matrixmaterial 13, in diesem Fall Epoxidharz, in die Kavität des formgebenden Werkzeugs 2 injiziert wird. Die Material- und Energiezuleitungen zum Mischkopf 12 werden seitlich über eine Aussparung im oberen Hüllwerkzeug 8 herausgeführt. (Fig. 8)

Das Matrixmaterial 13 wird unter einem Druck von 10 bar über den Injektionsport 5 in das indirekt über das untere und obere Hüllwerkzeug 7, 8 auf 100°C geheizte, formgebende Werkzeug 2 eingepresst und die Kohlenstofffaser-Preform vollständig durchtränkt. Das Matrixmaterial 13 tritt aus den Spalten des formgebenden Werkzeugs 2 aus und füllt den durch die Abstandshalter 3 definierten Hohlraum zwischen dem formgebenden Werkzeug 2 und dem Hüllwerkzeug 7, 8 (Fig. 9). Dabei umschließt ein 2 mm dicker Epoxidharzfilm den gesamten Umfang des formgebenden Werkzeugs 2 bis an die Dichtungsstelle zwischen der Dichtungsnut 4 im formgebenden Werkzeug 2 und dem oberen Hüllwerkzeug 8. Das ausgehärtete Matrixmaterial 13 verbleibt bis zur Entformung am formgebenden Werkzeug 2.

In der umgekehrten Reihenfolge des Zusammenbaus wird das Werkzeugsystem aus der Presse entnommen. Nach dem Herausheben aus dem unteren Hüllwerkzeug 7 wird beim Öffnen des formgebenden Werkzeugs 2, zur Entformung des Werkstücks 1, der umhüllende Epoxidharzkörper, bevorzugt im Bereich der durch die Abstandshalter 3 entstandenen Sollbruchstellen, teilweise zerstört und problemlos entfernt.

### Bezugszeichenliste

- 1: Werkstück
- 1.1: Hinterschneidung des Werkstücks
- 1.2: Hinterschneidung des Werkstücks
- 2: formgebendes Werkzeug
- 2.1: Bodenelement
- 2.2: Deckelelement
- 2.3: Seitenelement
- 2.4: Seitenelement
- 2.5: Seitenelement
- 2.6: Seitenelement
- 3: Abstandshalter
- 3.1: Abstandshalter, unten
- 3.2: Abstandshalter, oben
- 3.3: Abstandshalter, vorn
- 3.4: Abstandshalter, rechts
- 3.5: Abstandshalter, hinten
- 3.6: Abstandshalter, links
- 4: Dichtungsnut
- 5: Injektionsport
- 6: Anschlagfläche für Hebesystem
- 7: unteres Hüllwerkzeug
- 8: oberes Hüllwerkzeug
- 9: umlaufende Werkzeugdichtung
- 10: unterer Pressentisch
- 11: oberer Pressentisch
- 12: Mischkopf
- 13: Matrixmaterial
- 14: geneigte Fläche formgebendes Werkzeug
- 15: geneigte Fläche Hüllwerkzeug

## Patentansprüche

1. Werkzeugsystem für einen "Resin Transfer Moulding"-Prozess (RTM-Prozess) aufweisend ein mehrteiliges formgebendes Werkzeug (2) und ein Hüllwerkzeug (7, 8), wobei die Kavität eines herzustellenden Werkstücks von dem formgebenden Werkzeug (2) vollumfänglich umschlossen wird und das formgebende Werkzeug (2) in ein mindestens zweiteiliges Hüllwerkzeug (7, 8) einlegbar ist, wobei das Hüllwerkzeug (7, 8) in geschlossenem Zustand eine druckdichte Prozesskammer bildet, und das formgebende Werkzeug (2) außenseitig und/oder das Hüllwerkzeug (7, 8) innen Abstandshalter (3) aufweist.

2. Werkzeugsystem nach Anspruch 1, **dadurch gekennzeichnet, dass** das formgebende Werkzeug (2) ein Schieberwerkzeug ist.

3. Werkzeugsystem nach einem der vorhergehenden Ansprüche, **dadurch gekennzeichnet, dass** das formgebenden Werkzeug (2) außen und das Hüllwerkzeug (7, 8) innen korrespondierende schräge Flächen aufweisen, durch die die Schließkraft des Hüllwerkzeuges (7, 8) als Schließkraft für das formgebende Werkzeug (2) wirkt.

4. Werkzeugsystem nach einem der vorangehenden Ansprüche, **dadurch gekennzeichnet, dass** die Abstandshalter (3) eine Höhe von 0,05 bis 3 mm aufweisen.

5. Werkzeugsystem nach einem der vorhergehenden Ansprüche, **dadurch gekennzeichnet, dass** das Hüllwerkzeug (7, 8) und das formgebende Werkzeug (2) eine Dichtung (4, 9) aufweisen und das untere und das obere Hüllwerkzeug (7, 8) somit eine druckdichte Prozesskammer bilden.

6. Werkzeugsystem nach einem der vorhergehenden Ansprüche, **dadurch gekennzeichnet, dass** dieses einen Injektionsport (5) aufweist und die Zuleitung zum Injektionsport (5), seitlich aus einem der Hüllwerkzeugteile (7, 8) austritt.

7. Werkzeugsystem nach einem der vorhergehenden Ansprüche, **dadurch gekennzeichnet, dass** das formgebende Werkzeug (2) Anschlagflächen (6) für Lastaufnahmemittel aufweist.

8. Verfahren zur Konsolidierung eines Faserverbundbauteils mit einem Werkzeugsystem nach einem der vorhergehenden Ansprüche, wobei die folgenden Verfahrensschritte durchgeführt werden:
a) Einbringen der Faserstruktur in die Kavität des formgebenden Werkzeugs (2) und zumindest teilweises Schließen des formgebenden Werkzeugs (2),
b) Transport des formgebenden Werkzeuges (2) in das Hüllwerkzeug (7,8), wodurch das formgebende Werkzeug (2) vollständig geschlossen wird, und Schließen des Hüllwerkzeugs (7,8),
c) Injektion des Matrixmaterials (13) in die Kavität des Hüllwerkzeuges (7,8) und Konsolidierung des Faserverbundbauteils,
d) Öffnen des Hüllwerkzeugs (7,8) und Entnahme des formgebenden Werkzeugs (2),
e) Öffnen des formgebenden Werkzeugs (2) und Entnahme des Faserverbundbauteils.

9. Verfahren nach Anspruch 8, **dadurch gekennzeichnet, dass** vor Durchführung des Schrittes c) die Kavität des Hüllwerkzeuges (7,8) evakuiert wird.

## Claims

1. Mold system for a "resin transfer molding" process (RTM process) having a multipart shaping mold (2) and an enveloping mold (7, 8), wherein the cavity of a workpiece to be manufactured is completely enclosed by the shaping mold (2) and the shaping mold (2) can be inserted into an at least two-part enveloping mold (7, 8), wherein the enveloping mold (7, 8) forms a pressure-tight process chamber in the closed state and the shaping mold (2) has spacers (3) on the outside and/or the enveloping mold (7, 8) has spacers (3) on the inside.

2. Mold system in accordance with claim 1, **characterized in that** the shaping mold (2) is a slide mold.

3. Mold system in accordance with one of the above claims, **characterized in that** the shaping mold (2) has corresponding oblique surfaces on the outside and the enveloping mold (7, 8) has corresponding oblique surfaces on the inside, by means of which the closing force of the enveloping mold (7, 8) acts as a closing force for the shaping mold (2).

4. Mold system in accordance with one of the above claims, **characterized in that** the spacers (3) have a height of 0.05 mm to 3 mm.

5. Mold system in accordance with one of the above claims, **characterized in that** the enveloping mold (7, 8) and the shaping mold (2) have a seal (4, 9) and the lower and the upper enveloping molds (7, 8) thus form a pressure-tight process chamber.

6. Mold system in accordance with one of the above claims, **characterized in that** it has an injection port (5) and the feed line to the injection port (5) exits laterally from one of the enveloping mold parts (7, 8).

7. Mold system in accordance with one of the above claims, **characterized in that** the shaping mold (2) has stop faces (6) for load-absorbing means.

8. Process for consolidating a fiber composite component with a mold system in accordance with one of the above claims, whereat the following process steps are carried out:
a) Insertion of the fiber structure into the cavity of the shaping mold (2) and at least partial closing of the shaping mold (2),
b) transporting of the shaping mold (2) into the enveloping mold (7, 8), as a result of which the shaping mold (2) is completely closed, and closing of the enveloping mold (7, 8),
c) injection of the matrix material (13) into the cavity of the enveloping mold (7, 8) or of the shaping mold (2) and consolidation of the fiber composite component,
d) opening of the enveloping mold (7, 8) and removal of the shaping mold (2),
e) opening of the shaping mold (2) and removal of the fiber composite component.

9. Process in accordance with claim 8, **characterized in that** the cavity of the enveloping mold (7, 8) is evacuated before carrying out step c).

## Revendications

1. Système d'outil pour un processus de «Resin Transfer Moulding» (processus RTM), présentant un outil (2) de formage en plusieurs parties et un outil enveloppant (7, 8), dans lequel la cavité d'une pièce à fabriquer est entourée sur tout son pourtour par l'outil (2) de formage, et l'outil (2) de formage peut être inséré dans un outil enveloppant (7, 8) au moins en deux parties, dans lequel l'outil enveloppant (7, 8), dans l'état fermé, forme une chambre de processus étanche à la pression, et l'outil (2) de formage côté extérieur et/ou l'outil enveloppant (7, 8) intérieurement présente des éléments d'espacement (3).

2. Système d'outil selon la revendication 1, **caractérisé en ce que** l'outil (2) de formage est un outil à coulisse.

3. Système d'outil selon l'une des revendications précédentes, **caractérisé en ce que** l'outil (2) de formage extérieurement et l'outil enveloppant (7, 8) intérieurement présentent des surfaces obliques correspondantes par lesquelles la force de fermeture de l'outil enveloppant (7, 8) agit en tant que force de fermeture pour l'outil (2) de formage.

4. Système d'outil selon l'une des revendications précédentes, **caractérisé en ce que** les éléments d'espacement (3) présentent une hauteur de 0,05 à 3 mm.

5. Système d'outil selon l'une des revendications précédentes, **caractérisé en ce que** l'outil enveloppant (7, 8) et l'outil (2) de formage présentent un joint d'étanchéité (4, 9), et l'outil enveloppant (7, 8) inférieur et supérieur forme ainsi une chambre de processus étanche à la pression.

6. Système d'outil selon l'une des revendications précédentes, **caractérisé en ce que** celui-ci présente un orifice d'injection (5), et la conduite d'amenée vers l'orifice d'injection (5) sort latéralement de l'une des parties d'outil enveloppant (7, 8).

7. Système d'outil selon l'une des revendications précédentes, **caractérisé en ce que** l'outil (2) de formage présente des surfaces de butée (6) pour des moyens de réception de charge.

8. Procédé destiné à la consolidation d'un composant en composite à fibres avec un système d'outil selon l'une des revendications précédentes, les étapes de procédé suivantes étant effectuées :
a) mise en place de la structure à fibres dans la cavité de l'outil (2) de formage et fermeture au moins partielle de l'outil (2) de formage,
b) transport de l'outil (2) de formage dans l'outil enveloppant (7, 8), ce qui fait que l'outil (2) de formage est complètement fermé, et fermeture de l'outil enveloppant (7, 8),
c) injection du matériau de matrice (13) dans la cavité de l'outil enveloppant (7, 8) et consolidation du composant en composite à fibres,
d) ouverture de l'outil enveloppant (7, 8) et enlèvement de l'outil (2) de formage,
e) ouverture de l'outil (2) de formage et enlèvement du composant en composite à fibres.

9. Procédé selon la revendication 8, **caractérisé en ce que**, avant la réalisation de l'étape c), la cavité de l'outil enveloppant (7, 8) est vidée.
